# EUROPÄISCHE PATENTSCHRIFT

(11) **EP 2 414 283 B1**
(45) Veröffentlichungstag und Bekanntmachung des Hinweises auf die Patenterteilung: **11.12.2013**
(21) Anmeldenummer: 10710046.3
(22) Anmeldetag: 25.03.2010
(51) Int. Cl.: C01B 7/04

(54) **VERFAHREN ZUR HERSTELLUNG VON CHLOR**
PROCESS FOR PREPARING CHLORINE
PROCÉDÉ DE FABRICATION DE CHLORE

(30) Priorität: 30.03.2009 EP 09156626
(43) Veröffentlichungstag der Anmeldung: 08.02.2012
(73) Patentinhaber: BASF SE, 67056 Ludwigshafen (DE)
(72) Erfinder: KARCHES, Martin, 67056 Ludwigshafen (DE); BACHMANN, Kati, 68309 Mannheim (DE); SESING, Martin, 67165 Waldsee (DE); RUMPF, Bernd, 68766 Hockenheim (DE); ODENWALD, Oliver, 69234 Dielheim (DE); SEIDEMANN, Lothar, 67346 Speyer (BE)
(86) Internationale Anmeldenummer: PCT/EP2010/053864
(87) Internationale Veröffentlichungsnummer: WO 2010/112385

(56) Entgegenhaltungen:
- EP-A1- 1 572 582
- WO-A1-91/06505
- WO-A1-2007/137685
- WO-A2-2007/085476
- DE-A1-102004 014 677
- US-A- 3 536 770

## Beschreibung

Die Erfindung betrifft ein Verfahren zur Herstellung von Chlor durch Oxidation von Chlorwasserstoff in Gegenwart eines heterogenen partikelförmigen Katalysators nach dem Deacon-Verfahren in einem Wirbelschichtreaktor.

Ein Wirbelschichtreaktor zur Herstellung von Chlor durch Oxidation von Chlorwasserstoff nach Deacon-Verfahren ist beispielsweise in DE-A 10 2004 014 677 beschrieben: Der Wirbelschichtreaktor umfasst ein Wirbelbett, enthaltend den heterogenen partikelförmigen Katalysator, der bevorzugt eine Metallkomponente auf einem oxidischen Träger enthält, beispielsweise Ruthenium- oder Kupferverbindungen auf Aluminiumoxid, insbesondere γ-Aluminiumoxid oder δ-Aluminiumoxid, Zirkoniumoxid, Titanoxid oder Mischungen hiervon. Dem Wirbelbett werden die Reaktionsgase über einen Gasverteiler zugeführt, wobei zur Steuerung der Temperaturverteilung innerhalb des Wirbelbettes mindestens ein Wärmetauscher angeordnet ist.

Die Oxidation von Chlorwasserstoff zu Chlor in Gegenwart eines heterogenen partikelförmigen Katalysators nach dem Deacon-Verfahren wird im Wirbelschichtreaktor bevorzugt bei Temperaturen im Bereich von 350 bis 450°C und Drücken im Bereich von 1 bis 10 bar ü, durchgeführt.

Wie in der Verfahrenstechnik üblich, wird vorliegend abgekürzt mit "bar ü" Überdruck und mit "bar a" Absolutdurck bezeichnet.

Um aus dem Wirbelbett die Reaktionswärme abzuführen, eignet sich insbesondere siedendes Wasser, da dieses große Wärmemengen bei konstanter Temperatur aufnehmen kann. Die Temperatur des Wassers ändert sich erst, wenn das gesamte Wasser verdampft ist. Die Siedetemperatur ist dabei abhängig vom Druck. Je höher der Druck des siedenden Wassers ist, desto höher ist die Siedetemperatur. Bevorzugt wird als Wärmetauscher ein Rohrbündelwärmeübertrager eingesetzt. Der Einsatz von Rohr bündelwärmetauschern im Deacon-Verfahren ist beispielsweise aus WO 2007 137685 A1 bekannt.

Aus technisch-wirtschaftlichen Gründen ist es sinnvoll, den Rohrbündelwärmeübertrager zur Abführung der Reaktionswäme aus dem Wirbelbett bei möglichst hoher Temperatur und somit möglichst hohem Druck zu betreiben, weil dies sowohl für das Anfahren des Reaktors vorteilhaft ist als auch Dampf auf einem höheren Druckniveau und somit höherer Qualität, liefert.

Die Rohre des Rohrbündelwärmeübertragers werden durch Korrosion durch das aggressive, Chlor enthaltende Reaktionsgemisch sowie durch Abrasion durch die Katalysatorpartikel des Wirbelbettes angegriffen. Daher kann es zu Rissen und schließlich zum kompletten Abriss von Rohren kommen. Nachteilig ist im vorliegenden Verfahren auch, dass Risse, bei denen Wasser oder Wasserdampf aus dem Rohr in den Reaktor austritt nicht detektiert werden können, da der Wärmeträger im Rohr Wasser ist und das Reaktionsgemisch ebenfalls Wasser enthält. Der Störfall durch eine Rohrbeschädigung kann daher erst detektiert werden, wenn bereits soviel Wasser oder Wasserdampf in den Reaktor ausströmt, dass es zu einem Druckanstieg im Reaktor kommt.

In der Anlage müssen stromabwärts der Wirbelschicht, entweder im Reaktor und/oder außerhalb desselben Rückhalteeinrichtungen für den heterogenen partikelförmigen Katalysator vorgesehen sein, aus Gründen des Emissionsschutzes, aber auch aus wirtschaftlichen Gründen, weil der im Deacon-Verfahren eingesetzte Katalysator teuer ist. Wenn infolge eines Rohrreißers Dampf aus den Rohren des Rohrbündelwärmeübertragers in den Innenraum des Wirbelschichtreaktors austritt, werden die Katalysatorpartikel feucht, und verstopfen die Rückhalteeinrichtungen. Durch Verstopfen der Rückhalteeinrichtungen nimmt der Dampfdruck im Reaktor stark zu, so dass dieser bersten kann. Da hierbei stark korrosives Chlor und Chlorwasserstoff austreten würde, ist ein derartiger Störfall unbedingt zu vermeiden.

Aus sicherheitstechnischen Gründen muss die Anlage so ausgelegt werden, dass bei einem Störfall durch einen Rohrreißer der Reaktor nicht birst. Hierzu sind im Stand der Technik zwei Optionen bekannt, erstens den Reaktor eigensicher zu bauen und zweitens eine Berstscheibe vorzusehen, über die der Dampf abgeblasen wird. Die erste Option hat den Nachteil, dass der Reaktor für einen sehr hohen Maximaldruck ausgelegt werden müsste, und entsprechend teuer wird. Die zweite Option hat den Nachteil, dass der austretende chlorhaltige Dampf nicht direkt in die Umgebung abgeblasen werden kann, sondern nur über einen Chlorwäscher, der sehr groß dimensioniert werden müsste.

Es war daher Aufgabe der Erfindung, ein Verfahren zur Herstellung von Chlor nach dem Deacon-Verfahren in einem Wirbelschichtreaktor mit Abführung der Reaktionswärme durch Siedekühlung mit Wasser, das in den Rohren eines Rohrbündelwärmetauschers zirkuliert, zur Verfügung zu stellen, das mit technisch einfachen Maßnahmen sicherstellt, dass der Wirbelschichtreaktor bei einem Rohrreißer nicht birst.

Die Aufgabe wird gelöst durch ein Verfahren zur Herstellung von Chlor durch Oxidation von Chlorwasserstoff in Gegenwart eines heterogenen partikelförmigen Katalysators nach dem Deacon-Verfahren in einem Wirbelschichtreaktor, wobei die Reaktionswärme durch Siedekühlung mit Wasser abgeführt wird, das in den Rohren eines Rohrbündelwärmetauschers zirkuliert, wobei das Wasser aus einer Dampftrommel über eine Zuleitung den Rohren des Rohrbündelwärmetauschers an einem Ende derselben zugeführt wird, sich in den Rohren durch Aufnahme der Reaktionswärme erwärmt und teilweise verdampft, unter Erhalt eines Wasser/Dampf-Gemisches, das am anderen Ende der Rohre des Rohrbündelwärmetauschers über eine Rückleitung in die Dampftrommel zurückgeleitet wird, das dadurch gekennzeichnet ist, dass der Maximaldruck für den der Wirbelschichtreaktor für den Fall des Abrisses eines Rohres des Rohrbündelwärmetauschers ausgelegt werden muss, minimiert wird, indem in die Zuleitung und in die Rückleitung jeweils ein Ventil eingesetzt wird, das bei einem Druckanstieg infolge des Abrisses eines Rohres die Zuleitung und die Rückleitung absperrt und dadurch verhindert, dass Wasser aus der Dampftrommel in den Wirbelschichtreaktor nachströmt.

Es wurde gefunden, dass es in einfacher Weise möglich ist, das Deacon-Verfahren in einem Wirbelschichtreaktor dergestalt durchzuführen, dass der Maximaldruck, für den der Reaktor ausgelegt werden muss, dass er bei einem Rohrreißer nicht birst, minimiert wird, indem der Rohrbündelwärmetauscher durch Vorsehen von Ventilen in der Zuleitung sowie in der Rückleitung zum Wirbelschichtreaktor eingeblockt wird, so dass sich bei einem Rohrreißer der Dampfkreis, umfassend den Rohrbündelwärmetauscher, die Dampftrommel, die Pumpe sowie die Verbindungsleitungen, nur teilweise in den Wirbelschichtreaktor entleert. Es strömt lediglich noch der Hold-up im Wärmetauscher selbst aus sowie die Wassermenge, die aus dem Dampfkreis innerhalb der Reaktionszeit der Ventile, bis zum Schließen derselben, nachströmt. Um die nachströmende Wassermenge möglichst gering zu halten ist es zweckmäßig, die Ventile in der Zusowie der Rückleitung möglichst nahe am Wirbelschichtreaktor vorzusehen. Die Ventile sollten vorteilhaft eine möglichst kurze Reaktionszeit aufweisen, bevorzugt werden Schnellschussventile, mit möglichst kurzer Reaktionszeit, eingesetzt. Vorteilhaft werden die Ventile redundant, das heißt doppelt, ausgeführt, um den Betrieb beim Ausfall eines Ventiles sicherzustellen.

Der Störfall durch Abriss eines Rohres und Austritt von Rohrwasser in den Innenraum des Reaktors wird detektiert, indem kontinuierlich die Durchflussmenge des Kühlwassers in der Zuleitung und/oder in der Rückleitung zum bzw. aus dem Rohrbündelwärmetauscher gemessen wird. Bevorzugt wird die Differenz zwischen der Durchflussmenge in der Zuleitung und der Durchflussmenge in der Rückleitung kontinuierlich gemessen. Sobald die Differenz der Durchflussmenge in der Zuleitung und in der Rückleitung größer ist als Null, insbesondere größer ist als 10 kg/s, wird ein Signal an die Ventile in der Zuleitung und in der Rückleitung geleitet und diese geschlossen.

Der Rohrbündelwärmetauscher wird bevorzugt bei einem Betriebsdruck im Bereich von 10 bis 200 bar ü, weiter bevorzugt von 20 bis 160 bar ü, besonders bevorzugt von 30 bis 120 bar ü, betrieben.

In einer bevorzugten Ausführungsform wird stromabwärts des Wirbelschichtreaktors zur Rückhaltung des heterogenen partikelförmigen Katalysators ein Zyklon und stromabwärts des Zyklons ein Filter angeordnet, und in einer Bypassleitung zwischen dem Wirbelschichtreaktor und dem Filter eine Berstscheibe vorgesehen, die birst, wenn der Zyklon verstopft ist, so dass der Inhalt des Wirbelschichtreaktors in den Filter strömt und dessen Volumen zum Entspannen nutzt.

Das Wasser wird den Rohren des Rohrbündelwärmetauschers bevorzugt über eine Pumpe zugeführt. In einer Ausführungsform zirkuliert das Wasser im Dampfkreis durch Naturumlauf.

Vorteilhaft können in den Wärmetauscherohren, in der Zuleitung und/oder in der Rückleitung Blenden vorgesehen sein, wodurch bis zum Schließen der Ventile weniger Wasser aus dem Dampfkreis nachströmt. Besonders vorteilhaft ist es, Blenden in der Zuleitung einzubauen.

In einer weiteren Ausführungsform wird die Rückleitung mit möglichst kleinem Hold-up, bevorzugt kleiner als 100 l, das heißt so kurz wie möglich, sowie nicht getaucht in die Dampftrommel ausgebildet. Dadurch wird aus der Dampftrommel lediglich Dampf, nicht jedoch Wasser angesaugt, und somit ein wesentlich kleineres Volumen im Vergleich zu Wasser.

In einer weiteren vorteilhaften Ausführungsform sind Rückschlagklappen in der Rückleitung vorgesehen, bevorzugt eine bis drei, in Reihe geschaltete Klappen. Diese verhindern, dass Wasser aus der Rückleitung in den Rohrbündelwärmetauscher zurückströmt.

Weiterhin wird vorgeschlagen, für den Rohrbündelwärmetauscher Rohre mit möglichst kleinem Durchmesser einzusetzen. Dadurch verringert sich bei gleicher Oberfläche des Wärmetauschers das Volumen desselben und die darin befindliche Wassermenge. Darüber hinaus strömt aus einem gerissenen Rohr mit kleinerem Durchmesser weniger Wasser aus.

Als weitere zusätzliche Maßnahme wird vorgeschlagen, den Wärmetauscher zu segmentieren, das heißt zwei oder mehrere, bevorzugt zwei bis zwanzig, weiter bevorzugt drei bis sieben voneinander getrennte Wärmeträgerkreisläufe, jeweils mit eigener Zu-und Rückleitung vorzusehen. Dadurch strömt bei einem Rohrreißer lediglich der Inhalt eines Rohrbündelwärmetauscher-Segmentes in den Reaktor aus.

Die Erfindung wird im Folgenden anhand eines Ausführungsbeispiels sowie einer Zeichnung näher erläutert.

### Ausführungsbeispiele

In einer Anlage für 17,8 t/h Chlor wird ein Reaktor mit 300 m³ freiem Volumen bei 440°C und 2 bar Überdruck betrieben. Entsprechend der Reaktionsenthalpie (807 kJ/kg Chlor) müssen etwa 4 MW Reaktionswärme Q* aus dem Reaktor abgeführt werden. Das Dampfsystem steht auf 160 bar ü, und entsprechend 360°C. Bei einem mittleren Wärmeübergangskoeffizient (k-Wert) des Wärmetauschers von 400 W/m²K ist gemäß Q* = k x A x ΔT eine Oberfläche A von 100 m² für den Wärmetauscher erforderlich. Dieser ist als Rohrbündel mit Rohren mit 60 mm Durchmesser ausgeführt. Das Volumen des Wärmetauschers errechnet sich zu V = d/4 x A, und somit zu 1,5 m³. Das zweiphasige Gemisch im Wärmetauscher hat eine mittlere Dichte von 0,6 t/m³. Im Wärmetauscher befinden sich somit 900 kg Wasser. In der Dampftrommel befinden sich 3 t Wasser, in der Zuleitung und in der Rückleitung jeweils 1 t Wasser, insgesamt somit 5,9 t Wasser im gesamten Dampfkreis.

Dem Reaktor ist ein Filter nachgeschaltet. Das freie Volumen bis zu den Filterkerzen, das heißt das Volumen der Zuleitung und das Volumen des Filters bis zu den Filterkerzen, beträgt 100 m³.

Nun wird der Störfall angenommen, das heißt ein Wärmetauscherrohr reißt komplett ab. Aus Literaturkorrelationen wurde berechnet, dass aus den Rohrenden während den ersten Sekunden je 163 kg/s Wasser/Dampf ausströmen. Für die Sicherheitsbetrachtung muss angenommen werden, dass das ausströmende Wasser am heißen Katalysator sofort verdampft und sich auf 400°C aufheizt. Weiterhin muss angenommen werden, dass der Reaktorausgang sofort verstopft.

### Ausführungsbeispiel 1 nach dem Stand der Technik:

Der Reaktor wird mit einer Berstscheibe ausgestattet, über die der Dampf auf einen Wäscher geleitet wird. Dieser müsste auf eine Dampfmenge von 326 kg/s ausgelegt werden.

### Ausführungsbeispiel 2 nach dem Stand der Technik:

Der Reaktor hat keine Berstscheibe, muss somit eigensicher ausgelegt werden. Nach einem Rohrabriss strömt das Wasser des Dampfkreises vollständig in den Reaktor, was nach dem idealen Gasgesetz zu einem Dampfdruck von 64 bar a führt. Der Reaktor muss somit auf einen Maximaldruck von 66 bar ü ausgelegt werden.

### Ausführungsbeispiel 1 nach der Erfindung:

Es werden in der Zu- und in der Rückleitung zum Rohrbündelwärmetauscher jeweils Schnellschussventile mit 3 s Schließzeit vorgesehen. Die Durchflussmengen in der Zuleitung und in der Rückleitung werden gemessen. Die Ventile schließen, wenn die Differenz zischen der Durchflussmenge in der Zuleitung und in der Rückleitung größer als 10 kg/s ist. Diese blocken den Wärmetauscher 3 s nach einem Rohrabriss ein. Entsprechend beträgt die austretende Wassermenge die im Wärmetauscher befindliche Menge (900 kg) und zusätzlich die innerhalb der 3 s nachströmende Menge, das heißt 3 x 2 x 163 kg/s = 978 kg, das heißt insgesamt 1878 kg. Es ergibt sich ein Auslegungsdruck für den Reaktor von 22,3 bar ü.

### Ausführungsbeispiel 2 nach der Erfindung:

Es wird zusätzlich eine Berstscheibe in einer Bypass-Leitung zwischen dem Wirbelschichtreaktor und dem Filter eingebaut. Dadurch steht bei einem Rohrreißer zusätzlich zu den 300 m³ freiem Volumen des Reaktors ein zusätzliches freies Volumen von 100 m³, das heißt insgesamt 400 m³ für die aus dem Rohrbündelwärmetauscher austretende Wassermenge zur Verfügung.

Es ergibt sich ein Auslegungsdruck für den Reaktor von 17,3 bar ü.

### Ausführungsbeispiel 3 nach der Erfindung:

Am Ein- und Austritt eines jeden Rohres werden 40 mm Blenden vorgesehen, die den nachströmenden Wasserfluss entsprechend der um den Faktor 4/9 kleineren Querschnittsmenge auf je 72 kg/s begrenzen. Insgesamt strömen dann noch 1332 kg Wasser in den Reaktor und der Auslegungsdruck beträgt 12,8 bar ü. Wegen des zusätzlichen Druckverlustes an den Blenden muss im Dampfkreis zwingend eine Pumpe eingesetzt werden.

### Ausführungsbeispiel 4 nach der Erfindung:

Die Dampftrommel wird sehr dicht an den Reaktor gesetzt, so dass der Hold-up in der Rückleitung bis zur Dampftrommel nur noch 72 kg beträgt. Gleichzeitig wird die Rückleitung nicht in die Dampftrommel eingetaucht und die Dampftrommel nur zu 2/3 mit Wasser gefüllt. Dadurch läuft die Rückleitung innerhalb einer Sekunde nach Rohrabriss leer und es strömt nur noch Dampf nach. Mit Dampf beträgt die durch die Blende nachströmende Wassermenge nur etwa 1/3 der Flüssigkeitsmenge, und somit 24 kg/s bei einer 40 mm Blende. Insgesamt treten dann 1236 kg Wasser in den Wirbelschichtreaktor aus, und der Auslegungsdruck beträgt 12,0 bar ü.

### Ausführungsbeispiel 5 nach der Erfindung:

Es werden zusätzlich Rückschlagklappen in der Rückleitung vorgesehen, die den Wasserzustrom auf 1/10 des Normalwertes begrenzen. Entsprechend strömen nur noch 7 kg/s aus der Rückleitung nach. Es treten insgesamt 1137 kg Wasser aus, und der Auslegungsdruck beträgt 11,2 bar ü.

### Ausführungsbeispiel 6 nach der Erfindung:

Zusätzlich wird das Rohrbündel des Rohrbündelwärmetauschers aus 30 mm Rohren gefertigt. Blenden sind nicht montiert. Dadurch beträgt für eine Oberfläche A des Wärmetauschers von 100 m² der Hold-up noch 0,75 m³, entsprechend 450 kg Wasser. Aus der Zuleitung strömen jetzt noch 41 kg/s nach, aus der Rückleitung 7 kg/s, begrenzt durch die Rückschlagklappen. Entsprechend treten insgesamt 594 kg Wasser aus und der Auslegungsdruck beträgt 6,8 bar ü.

### Ausführungsbeispiel 7 nach der Erfindung:

Zusätzlich wird der Wärmetauscher in drei gleiche Teile segmentiert. Dann beträgt der Hold-up eines Segmentes 0,25 m³, entsprechend 150 kg Wasser. Jedes der Segmente ist mit Schnellschussventilen und Rückschlagklappen ausgestattet, so dass die nachströmende Wassermenge die gleiche ist wie bei Ausführungsbeispiel 5. Somit treten insgesamt 294 kg Wasser aus und der Auslegungsdruck des Wirbelschichtreaktors beträgt 4,4 bar ü.

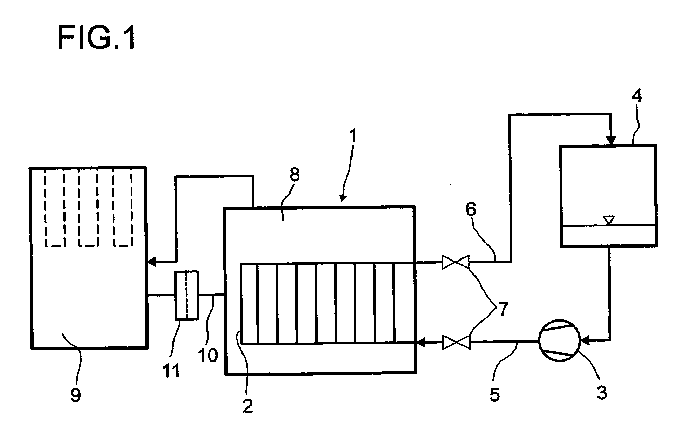

Die einzige Figur zeigt die schematische Darstellung einer Anlage zur Durchführung des erfindungsgemäßen Verfahrens mit einem Wirbelschichtreaktor 1, einen Dampfkreis umfassend einen Rohrbündelwärmetauscher 2, der im Wirbelschichtreaktor angeordnet ist, einer Dampftrommel 4, Pumpe 3, sowie Zuleitung 5 und Rückleitung 6 zwischen Dampftrommel und Rohrbündelwärmetauscher. Erfindungsgemäß ist in der Zuleitung und in der Rückleitung jeweils ein Ventil 7, möglichst nahe am Reaktor 1, angeordnet.

Im oberen Bereich des Reaktors ist ein Zyklon 8 vorgesehen, und stromabwärts desselben ein außerhalb des Reaktors angeordneter Filter 9. In einer Bypassleitung 10 zwischen dem Wirbelschichtreaktor 1 und dem Filter 9 ist erfindungsgemäß eine Berstscheibe 11 vorgesehen.

## Patentansprüche

1. Verfahren zur Herstellung von Chlor durch Oxidation von Chlorwasserstoff in Gegenwart eines heterogenen partikelförmigen Katalysators nach dem Deacon-Verfahren in einem Wirbelschichtreaktor (1), wobei die Reaktionswärme durch Siedekühlung mit Wasser abgeführt wird, das in den Rohren (2) eines Rohrbündelwärmetauschers zirkuliert, wobei das Wasser aus einer Dampftrommel (4) über eine Zuleitung (5) den Rohren (2) des Rohrbündelwärmetauschers an einem Ende derselben zugeführt wird, sich in den Rohren (2) durch Aufnahme der Reaktionswärme erwärmt und teilweise verdampft, unter Erhalt eines Wasser/Dampf-Gemisches, das am anderen Ende der Rohre (2) des Rohrbündelwärmetauschers über eine Rückleitung (6) in die Dampftrommel (4) zurückgeleitet wird, **dadurch gekennzeichnet, dass** der Maximaldruck für den der Wirbelschichtreaktor (1) für den Fall des Abrisses eines Rohres (2) des Rohrbündelwärmetauschers ausgelegt werden muss minimiert wird, indem in die Zuleitung (5) und in die Rückleitung (6) jeweils ein Ventil (7) eingesetzt wird, das bei einem Druckanstieg infolge des Abrisses eines Rohres (2) die Zuleitung (5) und die Rückleitung (6) absperrt und dadurch verhindert, dass Wasser aus der Dampftrommel (4) in den Wirbelschichtreaktor (1) nachströmt.

2. Verfahren nach Anspruch 1, **dadurch gekennzeichnet, dass** der Rohrbündelwärmetauscher bei einem Druck im Bereich von 10 bis 200 bar ü betrieben wird.

3. Verfahren nach Anspruch 2, **dadurch gekennzeichnet, dass** der Rohrbündelwärmetauscher bei einem Druck im Bereich von 20 bis 160 bar ü betrieben wird.

4. Verfahren nach Anspruch 3, **dadurch gekennzeichnet, dass** der Rohrbündelwärmetauscher bei einem Druck im Bereich von 30 bis 120 bar ü betrieben wird.

5. Verfahren nach Anspruch 1 bis 4, **dadurch gekennzeichnet, dass** die Ventile (7) doppelt ausgeführt sind.

6. Verfahren nach einem der Ansprüche 1 bis 5, **dadurch gekennzeichnet, dass** die Ventile (7) als Schnellschussventile ausgebildet sind.

7. Verfahren nach einem der Ansprüche 1 bis 6, wobei stromabwärts der Wirbelschicht des Wirbelschichtreaktors (1) zur Rückhaltung des heterogenen partikelförmigen Katalysators ein Zyklon (8) und stromabwärts des Zyklons (8) ein Filter (9) angeordnet ist, **dadurch gekennzeichnet, dass** in einer Bypassleitung (10)
zwischen dem Wirbelschichtreaktor (1) und dem Filter (9) eine Berstscheibe (11) angeordnet ist, die birst, wenn der Zyklon (8) verstopft ist, wobei der Inhalt des Wirbelschichtreaktors (1) in den Filter (9) strömt und dessen Volumen zum Entspannen nutzt.

8. Verfahren nach einem der Ansprüche 1 bis 6, **dadurch gekennzeichnet, dass** in den Rohren (2) des Rohrbündelwärmetauschers, in der Zuleitung (5) und/oder in der Rückleitung (6), insbesondere in der Zuleitung (5), Blenden vorgesehen sind.

9. Verfahren nach einem der Ansprüche 1 bis 7, **dadurch gekennzeichnet, dass** die Rückleitung (6) mit möglichst kleinem Hold-up, insbesondere mit einem Hold-up kleiner als 100 l, und bevorzugt nicht getaucht in die Dampftrommel (4), ausgeführt ist.

10. Verfahren nach einem der Ansprüche 1 bis 8, **dadurch gekennzeichnet, dass** in der Rückleitung (6) Rückschlagklappen, insbesondere eine bis drei Rückschlagklappen, die in Reihe geschaltet sind, angeordnet sind.

11. Verfahren nach einem der Ansprüche 1 bis 10, **dadurch gekennzeichnet, dass** die Rohre (2) des Rohrbündelwärmetauschers mit möglichst kleinem Durchmesser ausgebildet sind.

12. Verfahren nach Anspruch 11, **dadurch gekennzeichnet, dass** die Rohre (2) des Rohrbündelwärmetauschers mit einem Durchmesser im Bereich von 1 bis 100 mm ausgebildet sind.

13. Verfahren nach Anspruch 12, **dadurch gekennzeichnet, dass** die Rohre (2) des Rohrbündelwärmetauschers mit einem Durchmesser im Bereich von 25 bis 60 mm ausgebildet sind.

14. Verfahren nach einem der Ansprüche 1 bis 13, **dadurch gekennzeichnet, dass** der Rohrbündelwärmetauscher in 2 bis 20 voneinander getrennte Wärmeträgerkreisläufe, jeweils mit eigener Zuleitung (5) und eigener Rückleitung (6), segmentiert ist.

15. Verfahren nach Anspruch 14, **dadurch gekennzeichnet, dass** der Rohrbündelwärmetauscher in 3 bis 7 voneinander getrennte Wärmeträgerkreisläufe segmentiert ist.

## Claims

1. A process for preparing chlorine by oxidation of hydrogen chloride in the presence of a heterogeneous particulate catalyst by the Deacon process in a fluidized-bed reactor (1), in which the heat of reaction is removed by evaporative cooling by means of water which circulates in the tubes (2) of a shell-and-tube heat exchanger, with the water being fed from a steam drum (4) via a feed line (5) to the tubes (2) of the shell-and-tube heat exchanger at one end of these, being heated in the tubes (2) by uptake of the heat of reaction and partly vaporizing to give a water/steam mixture which at the other end of the tubes (2) of the shell-and-tube heat exchanger is recirculated via a return line (6) to the steam drum (4), wherein the maximum pressure for which the fluidized-bed reactor (1) has to be designed to allow for the event of rupture of a tube (2) of the shell-and-tube heat exchanger is minimized by a valve (7) which in the event of a pressure increase as a result of rupture of a tube (2) closes the feed line (5) and the return line (6) is installed in the feed line (5) and the return line (6) and thereby prevents water flowing from the steam drum (4) into the fluidized-bed reactor (1).

2. The process according to claim 1, wherein the shell-and-tube heat exchanger is operated at a pressure in the range from 10 to 200 bar gauge.

3. The process according to claim 2, wherein the shell-and-tube heat exchanger is operated at a pressure in the range from 20 to 160 bar gauge.

4. The process according to claim 3, wherein the shell-and-tube heat exchanger is operated at a pressure in the range from 30 to 120 bar gauge.

5. The process according to any of claims 1 to 4, wherein the valves (7) are duplicated.

6. The process according to any of claims 1 to 5, wherein the valves (7) are configured as quick-closing valves.

7. The process according to any of claims 1 to 6, wherein a cyclone (8) and downstream of the cyclone (8) a filter (9) are installed downstream of the fluidized bed of the fluidized-bed reactor (1) to retain the heterogeneous particulate catalyst, wherein a bursting disk (11) which bursts when the cyclone (8) is blocked is provided in a bypass line (10) between the fluidized-bed reactor (1) and the filter (9) so that in the event of blockage of the cyclone the contents of the fluidized-bed reactor (1) flow into the filter (9) and utilize the volume of the latter for depressurization.

8. The process according to any of claims 1 to 6, wherein orifice plates are provided in the tubes (2) of the shell-and-tube heat exchanger, in the feed line (5) and/or in the return line (6), in particular in the feed line (5).

9. The process according to any of claims 1 to 7, wherein the return line (6) is configured with very little hold-up, in particular with a hold-up of less than 100 l, and preferably does not dip into the liquid phase in the steam drum (4).

10. The process according to any of claims 1 to 8, wherein nonreturn valves, in particular from one to three nonreturn valves, which are corrected in series are installed in the return line (6).

11. The process according to any of claims 1 to 10, wherein the tubes (2) of the shell-and-tube heat exchanger have a very small diameter.

12. The process according to claim 11, wherein the tubes (2) of the shell-and-tube heat exchanger have a diameter in the range from 1 to 100 mm.

13. The process according to claim 12, wherein the tubes (2) of the shell-and-tube heat exchanger have a diameter in the range from 25 to 60 mm.

14. The process according to any of claims 1 to 13, wherein the shell-and-tube heat exchanger is segmented into from 2 to 20 separate heat transfer medium circuits, each having a dedicated feed line (5) and a dedicated return line (6).

15. The process according to claim 14, wherein the shell-and-tube heat exchanger is segmented into from 3 to 7 separate heat transfer medium circuits.

## Revendications

1. Procédé de fabrication de chlore par oxydation de chlorure d'hydrogène en présence d'un catalyseur particulaire hétérogène selon le procédé Deacon dans un réacteur à lit fluidisé (1), la chaleur de réaction étant dissipée par refroidissement par ébullition avec de l'eau, qui circule dans les tubes (2) d'un échangeur de chaleur à faisceau de tubes, l'eau étant introduite dans les tubes (2) de l'échangeur de chaleur à faisceau de tubes à une extrémité de ceux-ci à partir d'un tambour de vapeur (4) par une conduite d'alimentation (5), se réchauffant et s'évaporant partiellement dans les tubes (2) par absorption de la chaleur de réaction, avec obtention d'un mélange eau/vapeur, qui est réintroduit dans le tambour de vapeur (4) à l'autre extrémité des tubes (2) de l'échangeur de chaleur à faisceau de tubes par une conduite de retour (6), **caractérisé en ce que** la pression maximale pour laquelle le réacteur à lit fluidisé (1) doit être conçu en cas de rupture d'un tube (2) de l'échangeur de chaleur à faisceau de tubes est minimisée en utilisant un clapet (7) respectivement dans la conduite d'alimentation (5) et dans la conduite de retour (6), qui bloque la conduite d'alimentation (5) et la conduite de retour (6) lors d'une élévation de pression due à la rupture d'un tube (2) et empêche ainsi que l'eau issue du tambour de vapeur (4) ne s'écoule dans le réacteur à lit fluidisé (1).

2. Procédé selon la revendication 1, **caractérisé en ce que** l'échangeur de chaleur à faisceau de tubes est exploité à une pression dans la plage allant de 10 à 200 bar.

3. Procédé selon la revendication 2, **caractérisé en ce que** l'échangeur de chaleur à faisceau de tubes est exploité à une pression dans la plage allant de 20 à 160 bar.

4. Procédé selon la revendication 3, **caractérisé en ce que** l'échangeur de chaleur à faisceau de tubes est exploité à une pression dans la plage allant de 30 à 120 bar.

5. Procédé selon les revendications 1 à 4, **caractérisé en ce que** les clapets (7) sont conçus en double.

6. Procédé selon l'une quelconque des revendications 1 à 5, **caractérisé en ce que** les clapets (7) sont conçus sous la forme de clapets à fermeture rapide.

7. Procédé selon l'une quelconque des revendications 1 à 6, un cyclone (8) étant agencé en aval du lit fluidisé du réacteur à lit fluidisé (1) pour la rétention du catalyseur particulaire hétérogène et un filtre (9) étant agencé en aval du cyclone (8), **caractérisé en ce qu'**une plaque de rupture (11) est agencée dans une conduite de dérivation (10) entre le réacteur à lit fluidisé (1) et le filtre (9), qui se rompt lorsque le cyclone (8) est colmaté, le contenu du réacteur à lit fluidisé (1) s'écoulant dans le filtre (9) et son volume servant à la détente.

8. Procédé selon l'une quelconque des revendications 1 à 6, **caractérisé en ce que** des déflecteurs sont prévus dans les tubes (2) de l'échangeur de chaleur à faisceau de tubes, dans la conduite d'alimentation (5) et/ou dans la conduite de retour (6), notamment dans la conduite d'alimentation (5).

9. Procédé selon l'une quelconque des revendications 1 à 7, **caractérisé en ce que** la conduite de retour (6) est conçue avec aussi peu de rétention que possible, notamment avec une rétention inférieure à 100 l, et n'est de préférence pas immergée dans le tambour de vapeur (4).

10. Procédé selon l'une quelconque des revendications 1 à 8, **caractérisé en ce que** des clapets de non-retour, notamment un à trois clapets de non-retour, qui sont connectés en série, sont agencés dans la conduite de retour (6).

11. Procédé selon l'une quelconque des revendications 1 à 10, **caractérisé en ce que** les tubes (2) de l'échangeur de chaleur à faisceau de tubes sont conçus avec un diamètre aussi petit que possible.

12. Procédé selon la revendication 11, **caractérisé en ce que** les tubes (2) de l'échangeur de chaleur à faisceau de tubes sont conçus avec un diamètre dans la plage allant de 1 à 100 mm.

13. Procédé selon la revendication 12, **caractérisé en ce que** les tubes (2) de l'échangeur de chaleur à faisceau de tubes sont conçus avec un diamètre dans la plage allant de 25 à 60 mm.

14. Procédé selon l'une quelconque des revendications 1 à 13, **caractérisé en ce que** l'échangeur de chaleur à faisceau de tubes est segmenté en 2 à 20 circuits de caloporteur séparés les uns des autres, possédant chacun une conduite d'alimentation (5) propre et une conduite de retour (6) propre.

15. Procédé selon la revendication 14, **caractérisé en ce que** l'échangeur de chaleur à faisceau de tubes est segmenté en 3 à 7 circuits de caloporteur séparés les uns des autres.
